(19) Europäisches Patentamt
European Patent Office
Office européen des brevets

(11) **EP 4 613 097 A1**

(12) **EUROPEAN PATENT APPLICATION**

(43) Date of publication:
**10.09.2025 Bulletin 2025/37**

(21) Application number: **25161934.2**

(22) Date of filing: **05.03.2025**

(51) International Patent Classification (IPC):
***A01N 43/28*** *(2006.01)* ***A01N 43/32*** *(2006.01)*
***A01P 1/00*** *(2006.01)*

(52) Cooperative Patent Classification (CPC):
**A01N 43/28; A01N 43/32**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.03.2024 IT 202400005167**

(71) Applicant: **Fluos S.A.S. Di Giuseppe Chiaradia & C.**
**21052 Busto Arsizio (VA) (IT)**

(72) Inventors:
- **CHIARADIA, Giuseppe**
  **Busto Arsizio (VA) (IT)**
- **TURESSO, Caterina**
  **Busto Arsizio (VA) (IT)**
- **BASTIAENSEN, Erik**
  **Kapellen (BE)**
- **COLOMBO, Dario**
  **Busto Arsizio (VA) (IT)**

(74) Representative: **Giugni, Diego et al**
**Propria S.r.l.**
**Via della Colonna, 35**
**33170 Pordenone (IT)**

(54) **USE OF ESTERS FROM VEGETABLE OILS FOR THE PRODUCTION OF POLYMERIC MATERIALS WITH ANTIMICROBIAL ACTIVITY**

(57) The present invention concerns the use of esters from vegetable oils in formulations for the production of polymeric materials whose surface has antimicrobial properties. This invention allows the creation of articles in PVC, polyurethane, epoxy resins, SBR and NBR rubbers and other polymers having the ability to destroy viruses and bacteria that deposit on their surface.

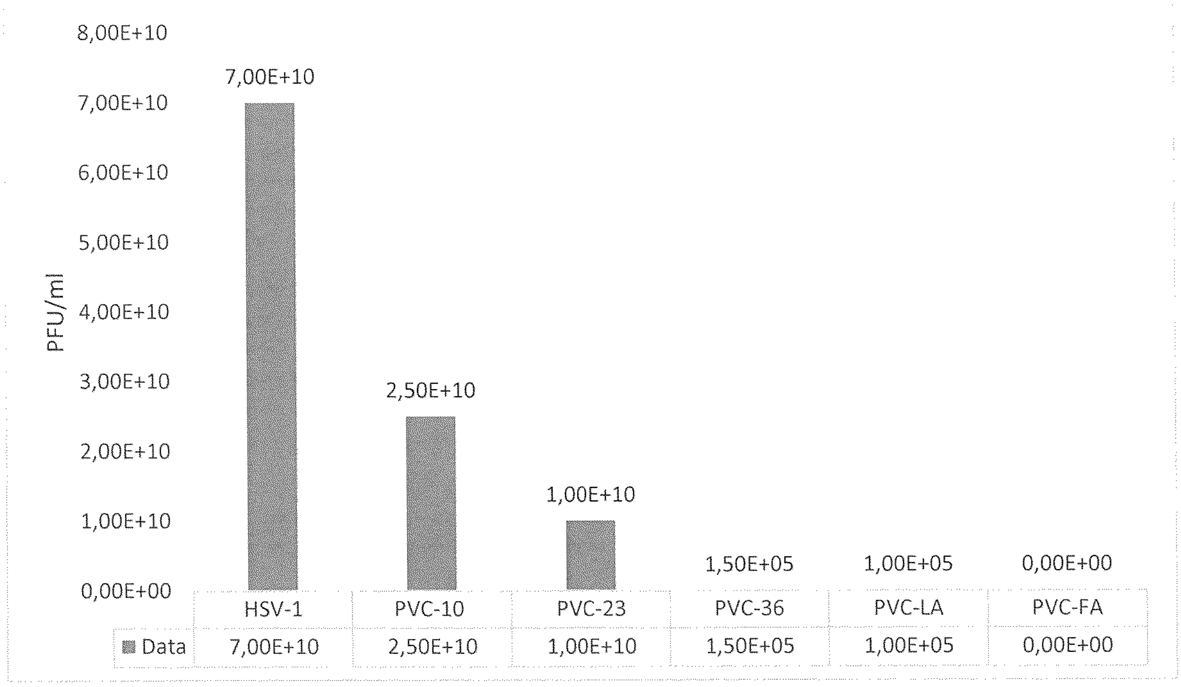


FIGURA 1

EP 4 613 097 A1

## Description

### TECHNICAL FIELD OF THE INVENTION

The present invention concerns the use of esters from vegetable oils in formulations for the production of polymeric materials whose surface has antimicrobial properties. This invention makes it possible to produce articles in PVC, polyurethane, epoxy resins, SBR and NBR rubbers and other polymers with the ability to destroy viruses and bacteria that settle on their surface.

### BACKGROUND OF THE INVENTION

The sanitization treatment of floors, tables, chairs, counters, etc., is generally carried out by distributing disinfectant agents on their surfaces, which agents generally consisting of alcohol solutions such as ethyl alcohol. However, after treatment, the alcohol or disinfectant agent is removed mechanically or by evaporation. As a result, the surface is again exposed to the reception of microorganisms and pathogens.

Therefore, it is desirable to have a material capable of deactivating viruses and bacteria when they settle on their surface so as to avoid the accumulation of pathogens on the surface, thus making the disinfectant action permanent.

In addition, polymeric materials such as flooring, wall coverings, clothing, disposable gloves and objects in general, made using materials with antimicrobial properties, do not require disinfection treatment. The fact of using these materials with antimicrobial properties in structures and institutions open to the public, such as hospitals, schools, workplaces, etc., significantly improves the sanitary conditions of those environments.

Particularly in hospitals, which are inevitably frequented by sick people and therefore particularly susceptible to infection, the need to prevent people from touching objects or materials that may be contaminated is essential to prevent contagion from spreading among hospital patients.

Items such as containers or floors with coatings are appearing on the market which, according to manufacturers, have antibacterial properties. A typical example is coatings containing silver nanoparticles (AgNP) or silver phosphate-based glasses.

Regarding the antibacterial activity of AgNPs, it is known that silver nanoparticles can continuously release Ag+ silver ions, and due to electrostatic attraction and affinity for sulfur proteins, silver ions can adhere to the cell wall and cytoplasmic membrane. After crossing the lipid protective membrane (the membrane is semipermeable to cations such as K+ and Na+) and penetrating the cytoplasm, silver ions can inhibit protein synthesis by denaturing ribosomes in the cytoplasm. In addition, Ag+ ions can cause deoxyribonucleic acid (DNA) to change. Since sulfur and phosphorus are important components of DNA, the interaction of silver ions with DNA sulfur and phosphorus can cause problems in DNA replication, cell reproduction, or even result in the termination of microorganisms.

However, in order for these mechanisms to occur, there must be direct contact between the silver particles and the micro-organism. But when silver nanoparticles are dispersed in a polymer matrix, the Ag+ silver ions of the particles trapped within the tangle of polymer chains tend to bind with the atoms of the negatively charged chains, forming strong ionic bonds that make it difficult to interact with the functional groups of the binding proteins located on the cell membrane of the micro-organism or to cross the membrane by diffusion.

Thus, due to the inability of the silver ion fixed on the particle to move and the strong ionic bonds with the polar atoms of the polymer chains, it becomes difficult even for a surface completely covered with Ag+ to break those bonds to form others by interacting with the functional groups of the binding proteins located on the cell membrane of the microorganism or to cross the membrane by diffusion.

To limit the interaction with polymer chain anions, it is necessary to make particular polymers with certain structural characteristics in order for silver nanoparticles to be effectively active ("Antibacterial waterborne polyurethane coatings impregnated with in-situ formed and capped silver nanoparticles via p-sulfonatocalix[4]arene", Progress in Organic Coating, 2023).

Therefore, due to the inevitable low efficacy of silver nanoparticles dispersed in standard polymeric materials, their use requires that the Ag+ ion be supported by special polymer mixtures that must be deposited on the substrate and subjected to a cross-linking process. However, along with the complexity of the coating process, especially for shaped objects, there are challenges due to the anchoring of the protective coating to the substrate.

Finally, there is also the delicate question of the toxicity of the silver ion. In fact, if the silver cation is able to interact with functional groups such as cysteine sulfur in the proteins of viruses and bacteria, destroying their functionality, the same thing happens with sulfur in the proteins of human cells. In the safety data sheets, soluble silver salts, which carry the Ag+ cation, are classified as reproductive toxicity, (category 1B), with the risk indication H360D: they can harm the foetus.

In particular, AgNPs are known to act by interacting in the intercellular space with the free viral particle or with the viral particle bound to the cell. In the first case, AgNPs cause a morphological alteration of the virion and in the second case they can inhibit the early stages of viral replication, such as the binding of the virus to the host cell or the penetration

processes of the virus itself.

The publication "Protective hybrid coating against envelope containing silver, copper and zinc cations effective against HIV and others enveloped viruses (BMC Microbiology, 2016)" reports a study on the anti-viral efficiency of a special polymer consisting of tetra-ethyl-orthosilicate, (trimethoxysilyl)-propyl methacrylate, methylmethacrylate with nanoparticles of silver and zinc and copper dispersed in them. The study reports good virucidal activity against *Herpx simplex* virus, while activity is low or zero against three other viruses tested, including the influenza virus.

Thus, regardless of the antibacterial efficacy or toxicity of the silver ion, the fact remains that the ability of silver nanoparticles dispersed in common polymer matrices such as PVC, PU, etc. is strongly impeded, as Ag+ ions can only be made active if dispersed on particular coatings. To confirm what has been written, there is no evidence on the market of articles in polymeric materials for which the manufacturer explicitly declares that they protect against viruses.

The mechanism of action of silver nanoparticles has been illustrated to highlight the extreme difficulty in being able to create polymeric materials with anti-microbiotic activities by inserting substances with intrinsic biocidal properties among the components of the polymer. This difficulty arises from the fact that, as is widely known, chemical processes require that there be an effective collision between the reacting molecules, i.e. that they have a certain kinetic energy and a correct orientation and therefore the reaction environment must necessarily be liquid or gaseous.

Silver nanoparticle coatings have shown their efficacy against bacteria, but there are no studies in which AgNP-coated materials show antiviral properties. This is demonstrated by the fact that products currently on the market are advertised with antibacterial properties.

Therefore, as things currently stand, ceramic-based materials with coatings of metal nanoparticles are available on the market that have the ability to protect against bacteria, but there are no common materials available that have the property of destroying the viruses that are deposited on them.

Moreover, respiratory viruses can remain infectious for several days causing a considerable risk of infection to anyone who touches a contaminated surface, while for infection with bacteria it is necessary that there is a wound in the skin barrier or that the protective tissue of the bronchi, lungs or mucous membranes has been compromised by viruses or lesions. These viruses are responsible for more deaths globally than any other infectious agent. In particular, SARS-CoV-2 causes respiratory tract infections and is responsible for the death of almost 7 million people since its appearance in 2020 to date. This tragedy has dramatically highlighted the importance of disinfecting environments, in particular schools, hospitals and in general places open to the public not only against bacteria, but also and above all against viruses.

In WO 2023/067492 A1, a fatty acid ester of Glycerol Formal is mentioned as a component of an alcohol solution containing antimicrobial lipids. The subject of the experimental study was the antimicrobial properties of alcoholic solutions of soy fatty acids, including those whose unsaturing double bonds are epoxidized. Table 2 lists the samples tested and sample 4 is an ethyl alcohol-based gel containing 2.5% of an epoxidized fatty acid of soy and 2.5% of an epoxidized fatty acid ester of Glycerol Formal with disinfectant properties. The fatty acid epoxidized ester of Glycerol Formal was added to test whether its presence could promote the anti-microbial action of fatty acids. In particular, it is claimed the use a disinfectant composition as a virucidal and comprising capable, after application on the surface of material, to make that surface active in the destruction of phatogens agents as viruses and bacteria for a prolonged time. So the patent application refers to alcoholic mixtures of antimicrobial lipids and not to solid materials with antimicrobial properties. After the application of the disinfectant composition and evaporation of the solvent, a very thin layer of lipid molecules remains on the surface. These molecules adhere to the surface like a film of lubricating oil, but they are not constituent parts of the material. In addition, the action of the lipid layer is limited in time because, due to the natural evaporation even at room temperature of all liquid compounds, including high-boiling compounds such as fatty acid esters, after a certain period of time the disinfectant action ceases because the ester has disappeared by evaporation. It is evident that said document refers to alcoholic mixtures of antimicrobial lipids and not to solid materials with antimicrobial properties.

## SUMMARY OF THE INVENTION

Following a series of biological tests on a PVC polymer material plasticized with a fatty acid ester of Glycerol Formal in which the double bonds of the hydrocarbon chains had been partially epoxy (GFE), which became necessary for acceptance as a material in medical devices, it was surprisingly discovered that that polymer possessed antimicrobial properties. In fact, the results of the tests indicated that the polymer was cytotoxic and following further investigation, it was found that it also had anti-microbial properties, in particular antivirals.

Subsequently, after exploratory tests, the Department of Public Health and Pediatric Sciences of Torino University (Italy) performed in-depth studies based on the evaluation of the replication of viruses and bacteria on PVC and polyurethane in the formulation of which increasing quantities of GFE have been introduced.

As shown by the examples below, the materials of this invention, consisting of polymers mixed with an epoxidized ester of Glycerol Formal, exhibit antimicrobial properties if the concentration of the epoxidized ester is greater than 10% wt. Polymers can be PVC, Polyurethane, Polyester, and all other polymers that are compatible with the epoxidized ester. It does not appear that polymeric materials with antimicrobial and in particular antiviral properties have been invented so far.

The results of experimental studies have indicated that polymeric materials in the formulation of GFE with a concentration of more than 10% have interesting antimicrobial properties. Above all, the deactivating activity against coated viruses, i.e. viruses with a protective membrane, such as the SARS-CoV-2 coronavirus or the hepatitis virus, was excellent.

This is a result that to be considered extraordinary because, as explained above, materials with antimicrobial properties currently on the market are made up of specific materials with certain structural characteristics to be suitable to support a coating of silver nanoparticles or other transition metals. These materials are mainly of ceramic origin. They also have little or no effectiveness against viruses and in particular against respiratory viruses.

The polymeric material of this invention constitutes an innovation that can improve the health aspect from the point of view of preventing contagion from diseases in the environments in which people live. In fact, polymers can be used to make floors, wall coverings, disposable gloves, tablecloths, shoe soles and many other objects with antimicrobial properties not only against bacteria, but also and above all against viruses, in particular respiratory viruses, which are not transmitted through the blood and therefore a wound, but by simple inhalation.

The fatty acid epoxidized ester with Glycerol Formal has been patented as a plasticizer (US patent 9,969,862). Adding a plasticizer to the polymer changes its flexibility properties, as it lowers the modulus of elasticity, and a substance with these characteristics is called a plasticizer. More generally, according to the IUPAC definition, a plasticizer is a substance or material incorporated into a material to increase its flexibility, processability or distensibility. Thus, by adding plasticizers to thermoplastic polymers such as PVC, or polyurethanes and elastomers such as NBR or SBR rubber, it is possible to obtain the flexibility performance required of the final product (PVC), improve its workability (polyurethanes, hence also the name of viscosity reducer), or improve its elasticity (rubbers, hence also the name of extend).

Therefore, a first object of the present invention is the use of esters derived from vegetable oils for the production of polymeric materials with antimicrobial activity.

A second object is the use of formal glycerin fatty acid esters where the double bonds of hydrocarbon chains can be partially or totally epoxyd for the production of polymeric materials with antimicrobial activity.

A further object is the use of these esters to produce polymeric materials of various kinds, both thermoplastics and thermosets, elastomers or biopolymers.

A still further object is a material and article made of a polymeric material comprising said esters.

## BRIEF DESCRIPTION OF THE DRAWINGS

Further objects and advantages of the present invention will appear evident from the following description of non-limiting examples, with reference to the following figures, wherein the antiviral capacity of the polymeric materials of the invention is demonstrated:

- Figure 1 is a histogram showing the results of the standard plaque formation assay for the determination of the antiviral activity of the different PVC matrices;
- Figure 2 shows a histogram of a standard plaque formation assay for the determination of the antiviral activity of different PVC matrices, at different incubation times;
- Figure 3 is a histogram showing the results (PFU/mL) of a duplicate Standard Plaque Formation Assay experiment for the determination of the antiviral activity of different polyurethane tissue samples, after 5 hours of incubation.

## DETAILED DESCRIPTION OF THE INVENTION

The present invention consists in the use of an ester obtained from fatty acids where the double bonds of the hydrocarbon chains can be partially or totally epoxidized with Glycerol Formal (GFE) in the formulation to make a polymeric material with antimicrobial properties.

The present invention concerns also the production of polymeric materials with antimicrobial activity obtained by introducing an ester obtained from fatty acids into the composition to prepare the material where the double bonds of the hydrocarbon chains are partially or totally epoxidized.

For the antimicrobial activity of the material to be effective, the concentration of GFE must be greater than 10% wt.

Fatty acids are all carboxylic acids with a carbon number of 6 to 22 derived from animal fats or vegetable oils, including those obtained from the oxidative cleavage process of vegetable oils.

Epoxidized esters of fatty acids with Glycerol Formal are disclosed in EP 3068829B1 and US 9,969,862B. The structure of the two isomers of the epoxidized ester of linoleic acid in which only one double bond is epoxidized is shown in the following diagrams. (6-atom linoleic acid - epoxide, 1,3-dioxan-5-yl ester isomer) and 5-atom isomer (linoleic acid - epoxide, (1,3-dioxolan-4-yl) methyl ester):

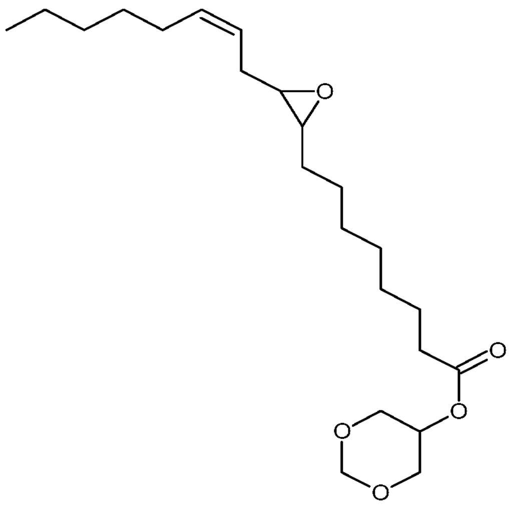

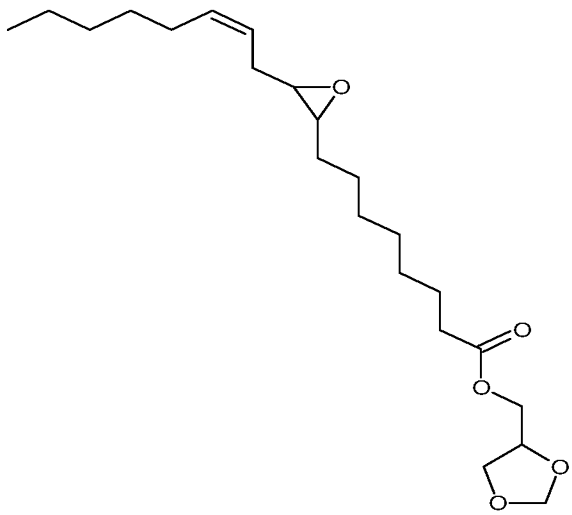

Table 1 below shows the fatty acid composition of some vegetable oils:

TABLE 1

| MAIN FATTY ACIDS | RAPESEED wt% | SOYBEAN wt% | PALM Wt% |
|---|---|---|---|
| Capric (C10:0) | - | - | - |
| Lauric (C12:0) | - | - | - |
| Myristic (C14:0) | - | 0,1 | 1,1 |
| Palmitic (C16:0) | 3,6 | 10,8 | 44,0 |
| Stearic (C18:0) | 1,5 | 4,0 | 4,5 |
| Oleic (C18:1) | 61,6 | 23,8 | 39,2 |
| Linoleic (C18:2) | 21,7 | 53,3 | 10,1 |
| Linolenic (C18:3) | 9,6 | 7,6 | - |

These esters can be obtained by direct esterification of fatty acids with Glycerol Formal and subsequent epoxidation of double bonds with a mixture of Hydrogen Peroxide and formic acid (performic acid), or, alternatively, by transesterification of the fatty acid methyl ester with formal glycerol and subsequent epoxidation of insaturations.

The polymeric material consists of any polymer: PVC, polyurethane, polyester, epoxy resin, polyamide, elastomers mixed with GFE together with other additives with their specific activities (heat stabilizers, flame retardants, etc.), and their combinations.

The epoxidation of the double bonds contained in the oleic, linoleic and linolenic acid chains is necessary to increase the compatibility of the plasticizer in polar polymers such as PVC and PU and consequently reduce its exudation to the outside. In fact, a polymeric material in which there is an evident exudation of the plasticizer cannot be placed on the market.

Esters of short-chain saturated fatty acids up to an atom number of 14, such as caprylic, pelargonic, lauric, myristic, have sufficient polarity to allow them to be very well compatible with polar polymers and moreover the molecular weight is high enough to have an acceptable volatility in many applications.

Epoxidation of the double bonds of the hydrocarbon chains of fatty acids is not necessary in the case of GFE being used in non-polar or low-polar polymers such as SBR and NBR rubbers as there are no compatibility problems.

In addition, since tests with fatty acid esters whose double bonds are not epoxy have shown a better ability to destroy pathogens, it is preferable that the epoxidation of the double bonds be pushed to the point of limiting the migration of the plasticizer out of the polymer to levels permitted by the acceptance specifications and no further.

The great advantage of this invention is that finished products made from polymeric materials containing GFE, such as flooring, wall coverings, packaging, medical gloves, clothing, blankets, etc., have the ability to destroy both bacteria and coated viruses.

Plasticizers are added in many PVC applications to increase flexibility. In applications such as disposable gloves, the amount of plasticizer can even exceed 50% by weight of the total. Therefore, if in a PVC polymer in which a certain degree of flexibility measured by Shore A hardness is required, if GFE is used as a plasticizer at a concentration higher than 10%, such a polymer will be given, together with the required flexibility, also the property of exerting a destructive action towards micro-organisms that settle on it. In order for the polymer to be effective, the amount of GFE by weight % of the total

to be added to the polymer must be at least 10%, preferably at least 20%, more preferably at least 30%, 36%, 40% or 50%.

Other polymers, such as polyurethanes, epoxy resins, SBR and NBR rubbers are already flexible by nature and plasticizers are often added as solvents to reduce their viscosity during processing. This is especially true when the molecular weight of the polymer is too high. It is therefore possible to make a polymeric material with antimicrobial activity by mixing it with GFE and increasing the molecular weight of the polymer in order to obtain an article with the required degree of flexibility together with antimicrobial properties.

The fatty acids that make up GFE are preferably with a carbon number of $C_6$-$C_{22}$, more preferably, said fatty acids include lauric, myristic, oleic, palmitic, stearic, linoleic, linolenic, eruric acid. It is preferable that the double bonds present in the $C_{18}$ - $C_{20}$ chains are epoxidized at least in part, in order to increase their compatibility with the polymer.

A further object of the invention consists of polymeric materials with antimicrobial activity comprising the above-mentioned fatty acid esters where the double bonds of the hydrocarbon chains can be epoxidized, collectively referred to as GFE. These materials include GFE as components of the polymer formulation in the quantities suitable for advantageously balancing the properties of plasticizers with antimicrobial properties and preferably with the aforementioned amounts in percentages.

The polymeric materials of this invention may include, but are not limited to, sanitary articles, hospital articles, work or kitchen utensils, stationery items such as pens and folders for collecting documents, flooring, wall coverings, packaging, medical gloves, clothing, blankets.

A still further object of the invention are articles produced with the aforementioned material for use in health and public facilities such as hospitals, sports centres, stadiums, workplaces, banks, post offices, restaurants.

Hereinafter, experimental data obtained with the use of the esters of the invention will be presented.

In particular, test results to determine the ability to deactivate microorganisms deposited on the surface of polymer samples plasticized with different amounts of GFE have demonstrated the ability of surfaces of these materials to deactivate coated viruses and bacteria.

Deactivation efficiency increases with the concentration of GFE in the polymer. Experimental tests have shown that it must be mixed with the polymer in a concentration of not less than 10% by weight of the total weight of the mixture to have an effective detection of antimicrobial activity.

Deactivation of the virus is exerted exclusively on viruses with lipid protective envelopes, and this is demonstrated by the fact that tests on naked viruses have not shown a deactivation action.

The object of the present invention concerns the creation of solid polymeric materials where the antimicrobial component, consisting of an ester of fatty acids with Glycerol Formal, is part of the material and not a coating or surface deposit, as instead according to the above patent application WO2023/067492A1.

It is to be noticed that a substance with intrinsic antimicrobial characteristics that can give a solid polymeric material with which it is homogeneously mixed, the ability to deactivate or destroy the microorganisms that settle on it without the need for special treatments of its surface, such as the addition of special coatings of metal nanoparticles, is unexpected even for a person skilled in microbiology science.

In particular, the surprising results of the present invention have been subsequently validated by microbiology experts who carried out the experimental studies on the esters according to the invention in order to explain the results. According to said experimental studies, the following is to be taken into account. Chemical reactions necessarily take place in a liquid or gaseous environment in which molecules can move freely in order to interact. This is particularly true for biochemical reactions, as it is required that macromolecules such as proteins and lipids are oriented in a certain way so that a chemical interaction can take place between them and with the chemical compounds that are introduced into the aqueous environment.

The biochemical processes leading to the destruction of the pathogen by the biocidal substance require, in addition to an adequate liquid environmental context, a minimum concentration of the biocidal compound and the absence of factors that could interfere with the action of the biocidal product. The correct orientation of the reacting molecules (steric factor) is very important and therefore even in an aqueous environment the action of the antimicrobial agent could be prevented due to a context that limits the mobility and the possibility of effective interaction between the antimicrobial agent and the functional groups contained in the protein macromolecules of the microorganism.

All tests of anti-microbial activity of substances are always carried out in suitable aqueous environments with physiological pH where molecules can move freely without impediments or interferences and therefore if a chemical compound is antimicrobial in an aqueous environment it should be excluded that it can maintain its antimicrobial activity even when it is dispersed within a solid matrix that strongly limits its movements inside and prevents its release outward leakage.

In the specific case of PVC plasticized with the epoxidized ester GFE, the mobility of these molecules is very low, due to the high molecular weight (340 gr/mole) and the intermolecular interactions with the polymers. In addition, the albeit modest mobility of the molecules takes place inside the polymeric material and even when the molecules migrate and emerge on the surface of the material, they remain strongly anchored to the polymer chains as there is strong compatibility between the polymer and the macromolecules of the plasticizer. Compatibility is due to the formation of strong dipole-dipole intermolecular bonds between the chlorinated polymer and the GFE polar groups. The higher the molecular weight and polarity of the plasticizer, the greater the force of attraction with the polymer.

It is therefore truly surprising that a biocidal substance dispersed within a solid polymeric material is able to give its surface anti-microbial properties, despite the fact that the molecules of the biocide are trapped inside the polymer without the need for special treatment of the material. As we explained in the introduction, it is necessary to create complex coatings consisting of silver nanoparticles containing Ag+ surface ions to be applied on stone materials in order to create a particular type of composite material whose surface has antibacterial properties. In this case, the Ag+ ions free on the surface can be absorbed by the particle containing biological fluid in which the microorganism is immersed.

Experts have hypothesized that when a micro-organism is deposited on the surface of the polymer material in question, its protective lipid membrane can come into contact with the GFE molecules dispersed in the polymer and therefore also present on its surface. GFE molecules can migrate inside the lipid membrane, destabilizing its integrity and consequently its functionality. In extreme cases, the membrane can be completely broken down with the destruction of the micro-organism. It should be borne in mind that the components of polymer solids have a minimal mobility as they are not held by covalent or ionic bonds, but by dipole-dipole or dispersion bonds. These considerations could justify the fact that the antimicrobial efficiency is related to the concentration of the ester in the polymer: the higher it is, the higher the anti-microbial efficiency.

The fatty acid esters of Glycerol Formal have the structural characteristics to make the polymer in which they are dissolved antimicrobial, as in addition to having the property of dissolving cell membranes, they are compatible with it in the sense that they can be homogeneously dispersed in it up to concentrations above 50% wt. In the case of polar polymers such as PVC or PU, it is necessary to increase their epoxy compatibility by adequately matching the double bonds of the hydrocarbon chains of the fatty acid.

EXAMPLES OF ANTIVIRAL ACTIVITY

In order to quantify the antiviral activity of the Glycerol formal epoxidized ester, several tests were performed based on the evaluation of viral replication on different polymeric materials. The human strain of coronavirus OC43 (HCoV-OC43), herpes simplex virus type 1 (HSV-1), and human adenovirus (HAdV) have been used as viral models. HCoV-OC43 is a surrogate closely related to Sars-CoV-2 and is considered an example of an RNA virus. HSV-1 and HAdV are ubiquitous viruses, belonging to the *Herpesviridae* and *Adenoviridae* families, respectively, with a double-stranded (ds) genome of DNA. Both have a protein coating (capsid) but, while HSV-1 has an additional outer phospholipid bilayer (pericapsid), HAdV lacks such a layer. They were then used as prototypes of "coated" (HSV-1) and "naked" (HAdV) viruses to evaluate viral replication on different PVC-based matrices. Herpes simplex virus type 1 (HSV-1) and human adenovirus (HAdV) were used as viral models.

1. Preparation of viral broth

The stocks of HSV-1 and HAdV, used for the experiments, were prepared by infecting African green monkey kidney cells (VERO), grown in Dulbecco's Modified Eagle's Medium (DMEM) soil, added with 10% fetal bovine serum (FBS). After the appearance of a complete cytopathic effect, cells and supernatants were collected and lysed with three freeze-thaw cycles (nitrogen/37°C). The viruses were aliquoted and stored at -80°C.

Viral titer for HSV-1 and HAdV was calculated as plaque-forming units (PLU), while for HCoV-OC43, infectivity was determined by measuring absorbance at 595 nm using a Victor X4 multi-label plate reader. The histograms were obtained by plotting the values of the $10^{-4}$ dilution, expressed for each concentration of the compound as a percentage of the mean absorbance of the uninfected control (mock) (set to 100%).

2. Experimental samples

Table 2 below shows the composition of the samples used to perform the tests. GFE-S stands for epoxy fatty acid ester with Glycerol Formal, where the fatty acids were obtained from soybean oil, PVC-FA indicates plasticized PVC with 32% GFE-S and 5% shorter chain fatty acid than lauric acid ($C_6$-$C_{11}$), PVC-GFL Indicates plasticized PVC with 36% of lauric acid esters with glycerol formal, acronym GFL, and DOTP stands for Dioctyl Terephthalate, which is taken as a typical reference phthalate-based plasticizer. In the GFE-S used in this test, approximately 85% of the double bonds of the fatty acids were epoxidized.

TABLE 2

| ITEM | DESCRIPTION: |
|---|---|
| DOTP | PVC containing 36% by weight DOTP |

(continued)

| ITEM | DESCRIPTION: |
|---|---|
| PVC-10 | PVC with 10% by weight of GFE-S |
| PVC-23 | PVC with 23% by weight GFE-S |
| PVC-36 | PVC with 36% by weight GFE-S |
| PVC-FA | PVC-32 with added 5% fatty acids |
| PVC-50 | PVC with 50% by weight GFE-S |
| PVC-GFL | PVC with 36% by weight GFL |
| PU-10 | PU with 10% by weight GFE-S |
| PU-20 | PU with 20% by weight GFE-S |
| PU-30 | PU with 30% by weight GFE-S |
| PU-40 | PU with 40% GFE-S weight |

3. Sample preparation.

The formulation components with PVC polymer, as specified in the table above, were turbo-mixed at temperatures of 70-80 °C. Subsequently, the mixture was processed in a laboratory calender for a few minutes with rollers heated to 160°C in order to produce plasticized PVC sheets. Subsequently, to obtain a constant thickness, the sheets were rolled and pressed into molds (200° C, 100 bar). Finally, the sheets were cut into circular-shaped test bodies with a diameter of 2 cm and 2 millimeters thick.

The polyurethane (PU) matrices were made by coating a plastisol consisting of PU added with increasing concentrations of GFE on a polyester fabric.

Samples were exposed to UV light (20 minutes per side) to remove contaminants that could interfere with viral analysis. 500 μl of viral inoculum (more than $10^{10}$ ELTs) were then added to the samples, centrifuged at 2000 rpm for 15 min to allow the adsorption of the virus and then incubated for the indicated times at room temperature. Samples were collected after light scratching of the sample to remove adsorbed viral particles, and 100 μL of sample was used to determine the viral titer by standard plaque formation.

4. Virus titration

The viral titer for HSV-1 and HAdV was calculated as plaque-forming units (PFU). Titration of HSV-1 was performed by the standard method of plate formation on confluent VERO cells, in 96-well plates. The viral suspension was diluted in series (from $10^{-3}$ to $10^{-10}$) in DMEM medium, added with 10% FBS and inoculated with 100 μl per well; infections were carried out at 37°C for 48 hours. After incubation, the plates were fixed and stained with a 0.1% purple crystal solution, and the cytopathic effect was evaluated by microscopic observation. The viral titer was calculated as PFU plaque-forming units PFU per ml:

$$\text{Viral titer (PFU/mL)} = \text{number of plaques} * 0.1 \text{ mL} / \text{dilution factor}$$

The HAdV titer was determined by the standard method of plates on confluent VERO cells, on a 24-well plate. Serial dilutions of the samples were performed in DMEM added with 10% FBS and inoculated on cell cultures, 0.3 mL per well; infections occurred at 37°C for 2 hours. After the adsorption step, the medium was removed and replaced with 1% methylcellulose (Sigma-Aldrich), diluted in DMEM 10% FBS. The cells were incubated at 37°C, 5% $CO_2$ for 7 days. The cytopathic effect was evaluated by microscopic observation. The viral titer was calculated as PFU/mL:

$$\text{Viral titer (PFU/mL)} = \text{number of plaques} * 0.3 \text{ mL/dilution factor}$$

The infectivity of the HCoV-OC43 coronavirus was determined by measuring absorbance at 595 nm using a Victor X4 multi-label plate reader. The histograms were obtained by plotting the values of the $10^{-4}$ dilution, expressed for each concentration of the compound as a percentage of the mean absorbance of the uninfected control (mock) (set to

100%).

5. Antiviral activity against HSV-1 virus on PVC

To determine the antiviral activity of plasticized PVC samples with increasing concentration of GFE-S, 100 μl of sample containing HSV-1, obtained after 5 hours of adsorption on samples, was analyzed by Standard Plaque Formation Assay, performed as described above. Figure 1 shows the results of the Standard Plaque Formation Test for the determination of the antiviral activity of different PVC samples, after 5 hours of incubation. HSV-1 (500 μL) was placed on the indicated PVC samples, and the untreated virus (called "HSV-1 control") was used as a positive control, that is on the bottom of the well no polymeric material was laid down. Infectious plaques were counted under the microscope and the mean value was expressed as plaque-forming units/mL (PFUs/mL). Each result is the average of two experiments, each performed in duplicate. The results obtained with GFE-S plasticized PVC samples after 5 hours of adsorption, show the ability of GFE-S at 36% by weight to completely inhibit HSV-1 replication. Even the sample with a concentration of less than 23% showed a strong ability to remove HSV-1, in fact, its concentration was reduced by 85%, going from $7 \times 10^{10}$ to $1 \times 10^{10}$ PFU/ml (figure 1).

From Figure 1 it can be seen that in addition to PVC plasticized with 36% GFE obtained from soybean oil, PVC mixed with 36% GFE obtained from lauric acid also has the same antiviral properties. The best performance was provided by 32% GFE-S to which 5% short-chain fatty acid was added.

To determine the antiviral activity over time of PVC samples plasticized with 36% GFE-S on a kinetics of HSV-1 infection, 100 μl of sample containing HSV-1, obtained after the adsorption times indicated on the samples, were analyzed by the standard plaque formation test. Each result (PFU/mL) is the average of two different experiments, each titrated in duplicate. In Figure 2, the Standard Plaque Formation Assay is shown for the determination of the antiviral activity of different PVC samples, at different incubation times (30 minutes, 1.5 hours, 3 hours, 5 hours). HSV-1 (500 μl) was placed on the indicated PVC sample and the untreated virus (called "HSV-1") was used as a positive control. Infectious plaques were counted under the microscope and the mean value was expressed as plaque-forming units/mL (PFUs/mL). Each result is the average of two different experiments, each titrated in duplicate. The data obtained show that already after 30 minutes PVCs with a concentration of 23% by weight and higher of GFE have already killed more than 94% of HSV-1 viruses. After 5 hours, the destruction of the virus is total for samples at 36% and 50% by weight. No antiviral action was noted by Dioctyl Terephthalate (DOTP) and GFE-S at 10% wt.

6. Antiviral activity against HcoV-OC43 virus on PVC

The infectivity of HCoV-OC4 was determined by measuring absorbance at 595 nm using a Victor X4 multi-label plate reader. The histograms were obtained by plotting the values of the $10^{-4}$ dilution, expressed for each concentration of the compound as a percentage of the mean absorbance of the uninfected control set to 100%. The following Table 3 shows viral replication in % after 5 hours.

TABLE 3

| | Viral replication % | |
|---|---|---|
| | After 3 hours | After 5 hours |
| Control | 100 | 100 |
| DOTP | 97 | 95 |
| PVC-10 | 95 | 93 |
| PVC-23 | 85 | 70 |
| PVC-36 | 70 | 65 |
| PVC-50 | 65 | 30 |

7. Antiviral activity against HAdV virus on PVC

To determine the antiviral activity against HAdV adenovirus of 36% GFE-S plasticized PVC samples, 100 μl of HAdV-containing sample were analyzed, obtained after 5 hours of adsorption on samples, by standard plaque formation. The table 4 shows the results (PFUs/ml) of the average of a duplicate experiment.

TABLE 4

| SAMPLE | Conc PFUs/ml after 5 hours |
|---|---|
| Control | $2.5 \times 10^5$ |
| PVC- 36 | $1.8 \times 10^5$ |

Tests performed on viruses without encapsulated HAdV were unsuccessful. This confirms the hypothesis that the deactivation of the virus is caused by the rupture of the protective lipid membrane.

8. Antiviral activity against the HSV-1 virus on PU

To determine the antiviral activity of the different polyurethane samples with GFE additive obtained from soybean oil, 100 μl of sample containing HSV-1, obtained after 5 hours of adsorption on the samples, were analyzed by standard plaque formation tests. Figure 3 shows the results (PFU/mL) of a duplicate Standard Plaque Formation Assay experiment for the determination of the antiviral activity of different samples in PU tissues, after 5 hours of incubation. HSV-1 (500 μL) was placed on the indicated tissue samples and the untreated virus (called "HSV-1") was used as a positive control. Infection plaques were counted under the microscope and the mean value was expressed as plaque-forming units/mL (PFUs/mL). It can be seen that after 5 hours of contact the samples with 30% and 40% by weight GFE completely destroyed the viral colony that had settled on their surface. The action of the samples with a concentration of 10% and 20% showed a milder action.

9. Antiviral activity of GFE-L against HSV-1 virus on PVC

To determine the antiviral activity against HSV-1 virus of PVC samples plasticized with GFE-L at 36% wt, 100 μl of sample containing HSV1 were analyzed, obtained after 5 hours of adsorption on samples, by standard plaque formation. The table 5 shows the results (PFUs/ml) of the average of a duplicate experiment.

TABLE 5

| SAMPLE | Conc PFUs/ml after 5 hours |
|---|---|
| Control | $1.0 \times 10^9$ |
| PVC-GFL | $3.5 \times 10^3$ |

EXAMPLES OF ANTIBACTERIAL ACTIVITY

Antibacterial activity on PVC polymer material

To evaluate the antibacterial activity of GFE, different PVC-based matrices on the growth of Gram positive bacteria, *Staphylococcus aureus (ATCC 29213), and Gram negative,* Escherichia coli (ATCC *25922*).

1. Preparation of the bacterial strain

All the bacteria used in the project were cultured on specific agar culture media, inoculated in test tubes and kept at -80°C for a long period of storage.

2. Antibacterial assays

In detail, the bacteria were cultured overnight at 37°C in Mueller Hinton broth (MHB; Becton Dickinson and Company, United States). After incubation, the bacteria were centrifuged at 4,000 rpm for 10 minutes and the resulting pellet was resuspended in 100 μL of MHB and then diluted in MHB until a final concentration of $10^4$ colony-forming units (CFU)/mL was reached, as confirmed by colony counts on Mueller Hinton Agar (MHA; Becton Dickinson and Company, United States). The different PVC samples were transferred to multi-well plates and sterilized in a UV lamp for 20 min and then covered with 1.1 ml of bacterial suspension (104 CFU/ml). The plates were centrifuged at 2000 rpm for 10 min to allow bacteria to adhere to the PVC matrices and incubated for 5 hours at 37°C. Bacterial growth controls, represented by bacteria at the same concentration in the absence of materials, were incubated in MHB for the same time at the same temperature. At the end of incubation, a 40 kHz sonication protocol was used for 10 minutes at 22°C in 1.1 ml of sterile 0.9%

NaCl (Bieffe Medital S.p.A., Italy) to detach the bacteria adhering to the PVC samples. The total number of bacteria, represented by both bacteria firmly adhering to the matrix and planktonic bacteria, was quantified by plating on MHA to obtain CFU/ml. All experiments were conducted simultaneously for each material, tested in duplicate.

3. Experimental samples

Antibacterial assays were performed on the following matrices reported in table 6:

TABLE 6

| SAMPLE | DESCRIPTION |
|---|---|
| PVC-10 | PVC with 10% by weight of GFE-S |
| PVC-23 | PVC with 23% by weight of GFE-S |
| PVC-36 | PVC with 36% by weight of GFE-S |
| DOTP | PVC with 36% by weight of DOTP |

4. Antibacterial activity against *S. aureus*

Table 7 shows the results of antibacterial assays to evaluate the effect of differently treated PVC-based matrices on the growth of *S. aureus* at 5 hours. Untreated bacteria were used as a control of bacterial growth. Colonies were counted and the average was expressed as total CFUs. To obtain the CFU count, serial dilutions of the bacterial solution incubated with the different PVC samples were made and then plated on agar.

TABLE 7

| SAMPLE | CFU/ml after 5 hours | Reduction % |
|---|---|---|
| Control | $1,7*10^7$ | - |
| DOTP | $1,3*10^7$ | No |
| PVC-36 | $0,8*10^7$ | 53 |
| PVC-23 | $0,9*10^7$ | 47 |
| PVC-10 | $1,2*10^7$ | 29 |

5. Antibacterial activity against *E. coli*

The table 8 shows antibacterial assays to evaluate the effect of differently treated PVC-based matrices on E. *coli growth* at 5 hours. Untreated bacteria were used as a control of bacterial growth. Colonies were counted and the average was expressed as total CFUs. The results indicate that there is a significant reduction in the growth of *E.coli,* less than 1 Log of reduction respect to the control sample, which corresponds to more than 70%.

TABLE 8

| SAMPLE | CFU/ml after 5 hours | Reduction % |
|---|---|---|
| Control | $26*10^7$ | - |
| DOTP | $30*10^7$ | No |
| PVC-36 | $0,30*10^7$ | 99 |
| PVC-23 | $0,27*10^7$ | 99 |
| PVC-10 | $0,25*10^7$ | 99 |

Medical Vinyl Gloves with Antimicrobial Properties

Flexible PVC samples in sheet form suitable for the production of medical gloves were prepared with the method of dipping in a plastisol bath with the following formulation: 100 parts PVC (polyvinyl chloride) resin obtained by emulsion

process, 100 parts of a plasticizer mixture formed by 70 parts of PVC-36 and 30 parts of GFL, 1,5 parts of a stabilizing agent and 2 parts of a reinforcing filler. Finally, the sheets were cut into circular-shaped test bodies with a diameter of 2 cm.

To determine the antiviral activity against HSV-1 virus of PVC sample, 100 µl of sample containing HSV1 were analyzed, after 5 hours of adsorption on samples, by standard plaque formation. The following table shows the results (PFUs/ml) of the average of a duplicate experiment.

TABLE 9

| SAMPLE | Conc PFUs/ml after 5 hours |
|---|---|
| Control | $7.0 \times 10^{12}$ |
| Flexible PVC of this example | $6.5 \times 10^{6}$ |

Nitrile elastomers with Antimicrobial Properties

Acrylonitrile butadiene rubber (NBR) is an unsaturated statistical copolymer of acrylonitrile and butadiene. Because NBR has good resistance to oils and chemicals, it is widely used in the automotive and petroleum industries for engine oil and fuel transportation equipment, machinery, pumps, and so on. Another great use of NBR is in the production of disposable gloves. NBR applications vary depending on the acrylonitrile content and molecular weight of the polymer. The polarity characteristics of NBR are provided by the acrylonitrile component. The higher the fraction of acrylonitrile, the higher the polarity of the polymer.

Table 10 below shows a composition that could be used for the production of elastomers based on nitrile rubber. In this example GFE-A refers to a Glycerol Formal fatty acid ester from soy oil where about 80% of double bonds were epoxidized, GFE-B refers to Glycerol Formal fatty acid asters without epoxidation of double bonds of chain, NBR control refers to the polymer composition without plasticizers. The percentage amounts, measured in parts per 100 parts of polymer as it is (phr) are the same for both.

TABLE 10

| Composition for nitrile rubber | | | |
|---|---|---|---|
| COMPONENT | GFE A (phr) | GFE B | NBR control (phr) |
| NBR KUMHO KNB 40M | 100 | 100 | 100 |
| Carbon Black N772 | 20 | 200 | 20 |
| GFE-A | 40 | - | - |
| GFE-B | - | 40 | - |
| Cross-linking agent sulphur | 1,5 | 1,5 | 1,5 |
| Zinc oxide | 5,0 | 5,0 | 5,0 |
| Cyclohexyl-benzothiazole-sulfonamide | 1,3 | 1,3 | 1,3 |
| TMTM | 0,3 | 0,3 | 0,3 |
| Retarder PVI | 0,3 | 0,3 | 0,3 |

The compounds were prepared using a two-stage mixing procedure in a laboratory mixer. At first, the polymer was introduced, and soon after, processing oil, carbon black, stearic and all other components were added, except for sulfur and accelerator and CBS, which were added after 5 minutes.

To determine the antiviral activity against HSV-1 virus of nitrile elastomer of this example, 100 µl containing HSV1 were analyzed, after 5 hours of adsorption on samples, by standard plaque formation. The following Table 11 shows the results (PFUs/ml) of the average of a duplicate experiment.

TABLE 11

| SAMPLE | Conc. PFUs/ml after 5 hours |
|---|---|
| NBR Control | $8 \times 10^{7}$ |
| NBR with GFE-A | $2 \times 10^{6}$ |

(continued)

| SAMPLE | Conc. PFUs/ml after 5 hours |
|---|---|
| NBR with GFE-B | $9 \times 10^6$ |

Data of the table show significant reduction in the growth of bacteria, more marked for GFE-B.

POLIMERIC MATERIAL FOR MEDICAL GLOVES

The use of the polymeric material with anti-microbial properties of the present invention for the construction of objects, tools, floors and furnishings for hospital facilities is fundamental as it favors the spread of viruses and bacteria by contagion. One of the most important applications is in the production of anti-microbial gloves, in particular anti-viral, vinyl, nitrile and latex.

On Paragraph 8.1 of Annex II of Directive 93/42/EC on medical devices states: "The devices and their manufacturing processes must be designed such a way as to eliminate or reduce as much as possible the risks of infection for the patient, for the user and for third parties. The design must allow for easy handling and, if necessary, minimize the risks of contamination of the device by the patient or vice versa during use. Therefore, the European legislator requires that the medical device, in our case the disposable glove, protects not only the user from infection in the best possible way, but also the patient and "third parties", i.e. other people who are in that place. But this principle of prevention is common to all hospitals in the world.

Currently, no specific tests are required for the protection of patients or third parties, because there are no gloves with active protection towards other people who are touched by the glove wearer. Unfortunately, actual gloves are inert against microbes and the microbe deposited on the user's hands after touching the infected patient or even the bed in which he is lying or the chair on which he is sitting, can then be transferred to other untouched objects or, even more reprehensible, can be transferred to another patient, thus turning into a sneaky instrument of contagion.

Therefore, currently the only possible protection is towards the wearer of the glove, and as far as Regarding the criteria for classifying gloves as protective against micro-organisms, the references are the ISO 374-5: 2016 standard: "Requirements for risks from microorganisms to classify a disposable glove as protective against fungi, bacteria and viruses" and the ISO 16604:2004 standard, which describes the test to be carried out (permeability of the bacteriophage Phi-X174).

In the article "Testing for viral penetration of non-latex surgical and examination gloves" European Society of Clinical Microbiology and Infectious Diseases, CMI, 10, 322-326) some types of medical gloves are compared. Table 1 of the article summarizes the test results of virus penetration for the different types of gloves tested. The virus tested was bacteriophage FX174.

Table 12 summarizes the results of the penetration tests of the virus with the Brand A method B referring to sterile, powdered examination gloves made from polyvinyl chloride, and Brand B referring to non-sterile, powder-free examination gloves made from nitrile (YES indicates that the virus has passed through the material):

TABLE 12

| Glove Type | Stress level | YES | NO | %YES |
|---|---|---|---|---|
| Vinyl | Unstressed | 0 | 30 | 0% |
| | Stressed | 4 | 26 | 13% |
| | Punctured | 30 | 0 | 100% |
| Nitrile | Unstressed | 2 | 28 | 7% |
| | Stressed | 6 | 24 | 20% |
| | Punctured | 30 | 0 | 0% |

The table shows the results of three different glove conditions. The unstressed refers to the new glove, the stressed refers to a glove that has been subjected to stretching and rubbing according to a certain methodology and punctured simulates the fact that the glove can be subjected to micro-cracks during use.

The term micro-perforation describes holes that are too small to be recognized by users, but being large enough to allow the passage of microorganisms. The flexible nature of materials of gloves allows micro perforations to open and close depending on whether or not gloves are stretched. Micro-perforations may result from manufacturing defects, material fatigue or extensive wear. Permeation can occur through diffusion, capillary action, or forced movement across

the micro porous polimeric membrane.

The table shows that the permeability of vynil is slightly better than nitrile in gloves that have just been removed from the packaging, (the unstressed ones, while) in the stressed ones, permeability is higher: 13% against 20% of nitrile. In punctured gloves the 100% vinyl gloves showed a certain permeability al virus.

If the plasticizer of the vinyl glove is a GFE ester, the results of the permeability tests for vinyl would be better than those obtained with common plasticizers, because the virus in crossing the polymer tangle will necessarily move in an environment made up mainly anti-viral lipid molecules that cause their destruction. So we should expect zero permeability at least under stressed conditions and much better performance in punctured gloves.

Nitrile gloves do not contain plasticizers as the polymer already has the required flexibility characteristics. However, the introduction of even modest quantities of GFE plasticizer we could expect a reduction in permeability to viruses and bacteria. The reduction in permeability will be proportional to the concentration of GFE in the polymer. They may be as sufficient as 10 parts per 100 parts of GFE polymer as it is (10 phr) to obtain a satisfactory result.

CONCLUSIONS

According to the above, the results of the examples show that mixing the GFE ester with polymers compatible with it in portions greater than 10% wt allows to solve the drawbacks of the state of the art and demonstrates that important advantages have been achieved.

In fact, using the polymer according to the present invention, it is not necessary to treat the object or surface to disinfect it against microorganisms. Thanks to the new material, it is now possible to produce plastic or elastomeric objects that have the ability to kill viruses and bacteria when these viruses settle on the surface of said objects. In other words, important results in the production of materials that can improve the sanitary conditions of environments can be reached.

Furthermore, it is possible to produce substantially any polymeric material and, in particular, those used in hospitals, as they are important for creating the healthiest possible environment.

The variants and modifications of the polymers according to the present invention that fall within the skills of the person skilled in the art are to be considered covered by the attached claims.

For instance, the use of these anti-microbial material is very useful in hospitals. Materials are those used in hospitals as they prevent the spread of viruses and bacteria

Experimental data clearly indicate that the destructive action against enveloped viruses, in addition to being effective, is also rapid. In fact, the tests that have been shown in the examples, which were conducted under certain conditions, indicate complete destruction times of viruses in the order of 30 minutes. However, those conditions are a suspension consisting of cells infected with a certain virus that is put in contact with the polymeric surface, they indicate times of complete destruction of viruses in the order of 30 minutes, while in real conditions, where the virus is contained in small biological particles, emitted with breath or sneezes by the infected person or present on the hands or clothing of the infected person, the destruction times of viruses are to be considered immediate.

In fact, in this case it is not a question of having large quantities, of the order of 50 ml of biological liquid contained in special wells in contact with the surface, but of microscopic biological droplets that are deposited on the objects touched by the infected person or on the materials that come into contact with other infected materials, for example clothing of the infected person. The infinitesimal quantities of these droplets in relation to the relative vastness of the surface on which they are deposited make the destruction of the virus instantaneous.

## Claims

1. Use of plasticizers based on fatty acid esters with Glycerol Formal for the production of polymers with antimicrobial properties.

2. Use of plasticizers according to claim 1, wherein the double bonds in the hydrocarbon chains of fatty acids having double bonds can be at least partially epoxidized so as to increase the compatibility of said esters with polar polymers.

3. Use according to claim 1 or 2, wherein the number of carbon atoms in the fatty acids is between C6 and C22.

4. Use according to any one of claims 1 to 3, wherein the fatty acids include caprylic, pelargonic, lauric, myristic, palmitic, stearic, oleic, linoleic, linolenic, eruric acid.

5. Use according to any one of claims 1 to 4, wherein the polymers are selected from thermoplastics, thermosets, elastomers or biopolymers, possibly mixed together with additives, and combinations thereof.

6. Use according to claim 5, wherein said polymers are selected from polyvinyl chloride, polyurethane, nitrile-butadiene rubber (NBR), styrene-butadiene rubber (SBR), cellulose acetate, polyester resin, epoxy resins.

7. Use according to any of claims 1 to 6, wherein said esters are present in concentrations of at least 10% by weight of the total, preferably at least 20% by weight, at least 30% by weight, at least 40% by weight or at least 50% weight

8. Polymeric material with antimicrobial activity comprising fatty acid esters of Glycerol Formal where the double bonds of the hydrocarbon chains can be partially or totally epoxidized.

9. Polymeric material according to claim 8, wherein said esters are present in quantities of at least 10% by weight, at least 20%, at least 30%, at least 40% or at least 50%.

10. Material according to claims 8 and 9 for the production of healthcare articles, hospital articles, work or kitchen utensils, stationery objects such as pens and folders for collecting documents, floors, wall coverings, packaging, medical gloves, clothing, covers.

11. Articles produced with the material according to any of claims 7 to 10 for use in healthcare and public facilities such as hospitals, sports centers, stadiums, workplaces, banks, post offices, restaurants.

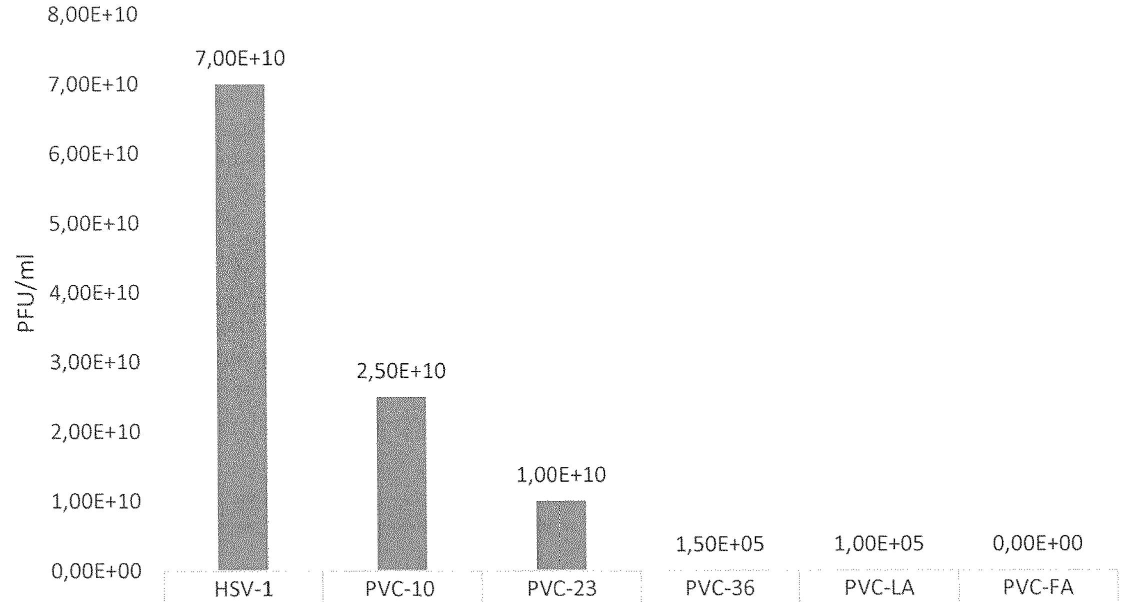


| | HSV-1 | PVC-10 | PVC-23 | PVC-36 | PVC-LA | PVC-FA |
|---|---|---|---|---|---|---|
| Data | 7,00E+10 | 2,50E+10 | 1,00E+10 | 1,50E+05 | 1,00E+05 | 0,00E+00 |

FIGURA 1

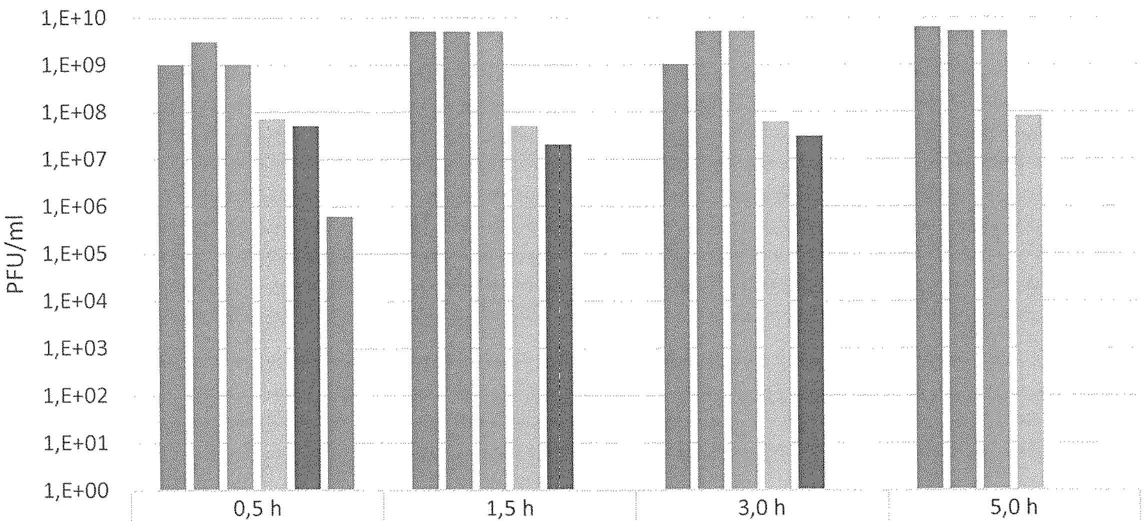


| | 0,5 h | 1,5 h | 3,0 h | 5,0 h |
|---|---|---|---|---|
| HSV1 | 1,E+09 | 5,E+09 | 1,E+09 | 6,E+09 |
| DOTP | 3,E+09 | 5,E+09 | 5,E+09 | 5,E+09 |
| PVC 10% | 1,E+09 | 5,E+09 | 5,E+09 | 5,E+09 |
| PVC 23% | 7,E+07 | 5,E+07 | 6,E+07 | 8,E+07 |
| PVC 36% | 5,E+07 | 2,E+07 | 3,E+07 | 0,E+00 |
| PVC 50% | 6,E+05 | 0,E+00 | 0,E+00 | 0,E+00 |

FIGURA 2

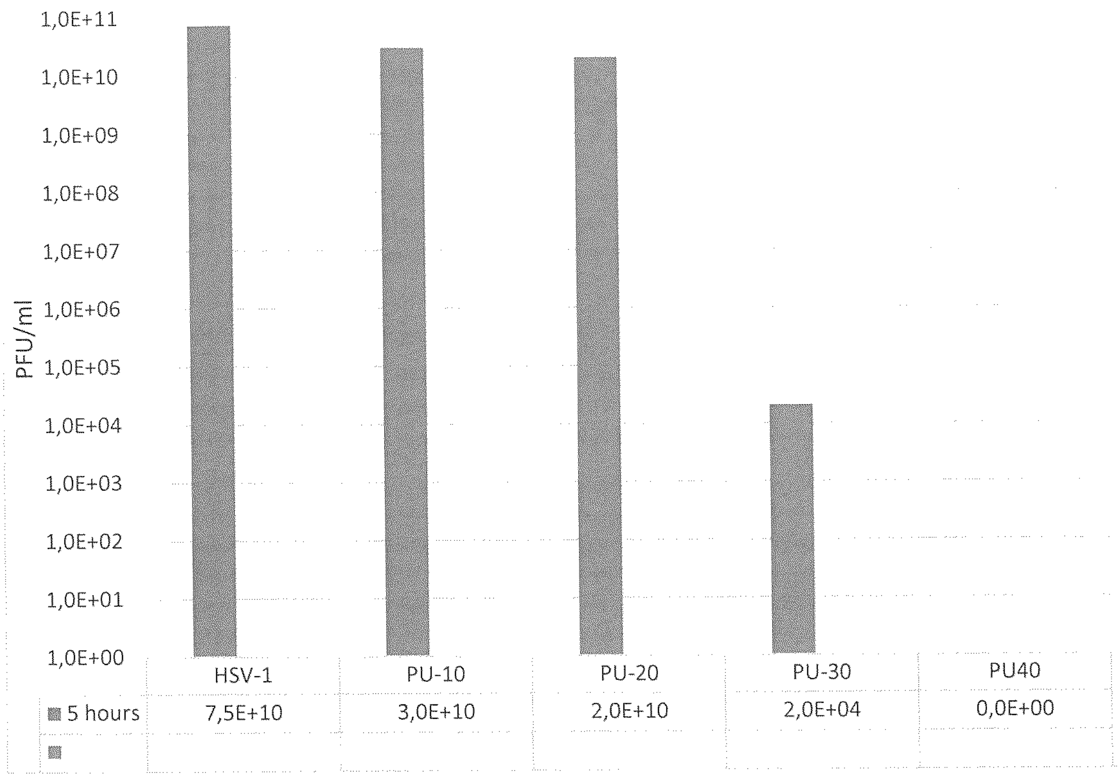
PFU/ml
1,0E+11
1,0E+10
1,0E+09
1,0E+08
1,0E+07
1,0E+06
1,0E+05
1,0E+04
1,0E+03
1,0E+02
1,0E+01
1,0E+00
HSV-1
PU-10
PU-20
PU-30
PU40
5 hours
7,5E+10
3,0E+10
2,0E+10
2,0E+04
0,0E+00

FIGURA 3

Europäisches Patentamt
European Patent Office
Office européen des brevets

# EUROPEAN SEARCH REPORT

Application Number
EP 25 16 1934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br><br>Y | EP 3 068 829 B1 (FLUOS S A S DI GIUSEPPE CHIARADIA&C [IT])<br>11 October 2017 (2017-10-11)<br>* examples 3-4 * | 1-11<br><br><br>1-7 | INV.<br>A01N43/28<br>A01N43/32<br>A01P1/00 |
| Y | WO 2023/067492 A1 (FLUOS S A S DI GIUSEPPE CHIARADIA & C [IT]; IND GENERALI S P A [IT]) 27 April 2023 (2023-04-27)<br>* page 12, lines 1-10; tables 2-3 * | 1-7 | |
| A | XIE YAO ET AL: "Antibacterial plasticizers based on bio-based engineering elastomers for medical PVC: synthesis, characterization and properties",<br>POLYMER CHEMISTRY,<br>vol. 12, no. 8,<br>1 January 2021 (2021-01-01), pages 1114-1124, XP093201653,<br>Cambridge<br>ISSN: 1759-9954, DOI: 10.1039/D0PY01702G<br>* The whole document, Fig. 1 * | 1-11 | TECHNICAL FIELDS SEARCHED (IPC)<br>A01N |
| A | SAMARTH NIKESH B. ET AL: "Modified Vegetable Oil Based Additives as a Future Polymeric Material-Review",<br>OPEN JOURNAL OF ORGANIC POLYMER MATERIALS<br>,<br>vol. 05, no. 01<br>1 January 2015 (2015-01-01), pages 1-22, XP093201672,<br>ISSN: 2164-5736, DOI:<br>10.4236/ojopm.2015.51001<br>Retrieved from the Internet:<br>URL:http://file.scirp.org/xml/53012.xml<br>* paragraph [05.3] * | 1-11 | |

2

The present search report has been drawn up for all claims

| Place of search | Date of completion of the search | Examiner |
|---|---|---|
| Munich | 6 August 2025 | Lorusso, Patrizia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 16 1934

This annex lists the patent family members relating to the patent documents cited in the above-mentioned European search report. The members are as contained in the European Patent Office EDP file on
The European Patent Office is in no way liable for these particulars which are merely given for the purpose of information.

06-08-2025

| Patent document cited in search report | Publication date | Patent family member(s) | Publication date |
|---|---|---|---|
| EP 3068829 B1 | 11-10-2017 | BR 112016010589 A2 | 08-08-2017 |
| | | CN 105722906 A | 29-06-2016 |
| | | EP 3068829 A2 | 21-09-2016 |
| | | ES 2655568 T3 | 20-02-2018 |
| | | PL 3068829 T3 | 29-06-2018 |
| | | US 2016264758 A1 | 15-09-2016 |
| | | WO 2015067814 A2 | 14-05-2015 |
| WO 2023067492 A1 | 27-04-2023 | CN 118102870 A | 28-05-2024 |
| | | EP 4418861 A1 | 28-08-2024 |
| | | US 2025241302 A1 | 31-07-2025 |
| | | WO 2023067492 A1 | 27-04-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023067492 A1
- US 9969862 B
- EP 3068829 B1


### Non-patent literature cited in the description


- Antibacterial waterborne polyurethane coatings impregnated with in-situ formed and capped silver nanoparticles via p-sulfonatocalix[4]arene. *Progress in Organic Coating*, 2023
- *BMC Microbiology*, 2016
- Testing for viral penetration of non-latex surgical and examination gloves. European Society of Clinical Microbiology and Infectious Diseases, CMI, vol. 10, 322-326